# EUROPEAN PATENT APPLICATION

(11) **EP 2 251 832 A1**
(43) Date of publication of application: **17.11.2010**
(21) Application number: 09290359.0
(22) Date of filing: 14.05.2009
(51) Int. Cl.: G06T 17/20, G06T 15/00

(54) **Method for generating a 3-dimensional model of an object**

(71) Applicant: Alcatel Lucent, 75008 Paris (FR)
(72) Inventor: Lou, Zhe, 2000 Antwerp (BE); Van Broeck, Sigurd, 2980 Zoersel (BE); Van den Broeck, Marc, 2860 Sint-Katelijne-Waver (BE); Van Raemdonck, Wolfgang, 2140 Antwerp (BE)
(74) Representative: Narmon, Gisèle Marie Thérèse

(57) **Abstract**

The present invention relates to a method for generating a 3 Dimensional model of a certain object. This method first includes the step of determining an object depth representation of the object and the step of generating a texture of the object. Subsequently, a 3-Dimensional model is generated by applying displacement mapping on said object depth representation of said object and subsequently applying said texture onto said 3-dimensional model of said object generated using said displacement mapping.

## Description

The present invention relates to a Method and related system for generating a 3-Dimensional model of an object.

Such a method is already known in the art, e.g. from the paper *"DATA PROCESSING IN 3D VIDEO SYSTEM BASED ON DATA FROM STRUCTERED LIGHT MEASUREMENT SYSTEM"* published at http://ieeexrplore.ieee.org/stamp/stamp/stamp.jsp?amumber=01024107

Therein, a system and method is described wherein 3-dimensional representations of objects are generated using a structured light. In such a system, the proposed true 3D video relies on the usage of an optical 3D object measurement system based on fringe projection method. This structured light measurement system provides output data, being depth-information on all points of the object in the form of clouds of co-ordinate points representing 3D object from multiple directions. The clouds of points are converted into the data accepted for visualization, being a 3-dimensional model, which finally can be combined with the virtual environment.

Structured light 3D scanners project a pattern of light on the subject and look at the deformation of the pattern on the subject. Taking an example of a two dimensional grid or line striped pattern. A camera offset slightly from the pattern projector is used to look at the deformation of the pattern and a fairly complex algorithm is used to calculate the distance at each point in the pattern.

This resulting "clouds of points" include a large number of points on the surface of an object, which represents the visible surface of the object that has been scanned or digitized. Such "clouds of points" themselves are generally not directly usable in most 3D applications and therefore are usually converted to triangle mesh models, NURBS surface models, or CAD models through a process commonly referred to as reverse engineering so that they can be used for various purposes. The conversion from a "clouds of points" to a 3D model is well known as a complex and computation intensive procedure.

Furthermore, such a structured light system is disadvantageous in that it is not practical in a real environment while a complex lighting installation is required.

An object of the present invention is to provide a method of the above known type but wherein the generation of a 3-dimensional model is done under normal lighting conditions.

According to the present invention, this object is achieved by the method according to claim 1, the system according to claim 7 and a 3-Dimensional model generator according to claim 8.

Indeed by at first generating an object depth representation of an object by measuring depth information related to the object and based on this generated object depth representation of the object, a 3-Dimensional model of the object can be produced by subsequently applying displacement mapping on the generated object depth representation of the object and mapping a generated texture of the object onto the 3-Dimensional model of the object produced using the displacement mapping a texturized 3-dimensional model of the object is derived under normal lighting conditions.

Due to the relatively fast and efficient processing, hence in very short time rendering a texturized 3-dimensional object that can be used in real-time solutions due to the short processing time of generating 3-D-models in case of changing objects.

This texture may be any texture obtainable from a high definition image, a standard definition texture or a predefined texture updated with the said image.

The generating an object depth representation is the determination of a depth measurement of the object and reconstructing the contours of the object by measuring depth of each point of the object.

Displacement mapping is an alternative computer graphics technique in contrast to bump mapping, normal mapping, and parallax mapping, using a (procedural-) texture- or height map to cause an effect where the actual geometric position of points over the textured surface are displaced, often along the local surface normal, according to the value the texture function evaluates to at each point on the surface. It gives surfaces a great sense of depth and detail, permitting in particular self-occlusion, self-shadowing and silhouettes; on the other hand, it is the most costly of this class of techniques owing to the large amount of additional geometry.

The reconstructed contours of the model are subsequently used for applying the mapping of the generated (high Definition) texture onto the 3-Dimensional model derived after displacement mapping.

An additional advantage of the present invention is that the method of the present invention, the related system and the related device obtain faster and in a more efficient way a 3-dimensional representation due to the fact that the displacement mapping technology consumes less computation resources compared to the clouds of points technology. Hence the system and method of the present invention can be used in real-time systems due to the relative simplicity of the processing resulting in a fast generation of a 3-Dimensional model.

A further characteristic feature of the present invention is described in claim 2.

The step of determining an object depth representation is based on extraction of a depth message obtained from a camera input. A typical depth message could be a gray-scale picture with the whitest mapping to is closest point to a camera.

Another further characteristic feature of the present invention is described in claim 3.

The step of determining an object depth representation of the object is based on depth measurements of an infrared distance measuring device. The object depth representation is generated based on determination of depth of each point of the object based on infrared-distance measurements. The infrared-distance measurements used to measure the distance that it takes for a particle, object or stream to reach a detector while traveling over a measured time.

A further characteristic feature of the present invention is described in claim 4.

The step of generating a (High Definition) texture of said object is a generating a (High Definition) 2 dimensional picture of a camera. The picture here is used for rendering the (High Definition) texture for mapping onto the 3-Dimensional model.

Still a further characteristic feature of the present invention is described in claim 5.

In the method in addition includes the step of filtering noise and/ or background information from the object depth representation resulting in an improved object depth representation without background information if background filtering is applied.

This object depth representation will be averagely be much more noisy than an object depth representation obtainable from a structured light measurement system. Here for, Filters, like e.g. Gaussian filter, bipolar filter are used for first reducing the noises.

Still another further characteristic feature of the present invention is described in claim 6.

A further step of the method according to the present invention comprises the step of blurring the initial object depth representation or the improved object depth representation, obtained by applying the filtering, in order to even further improve the object depth representation before applying the displacement mapping and the mapping of the (High Definition) texture onto the 3-dimensional model. By blurring the object depth representation the impact of noise in the original object depth representation can be further reduced.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

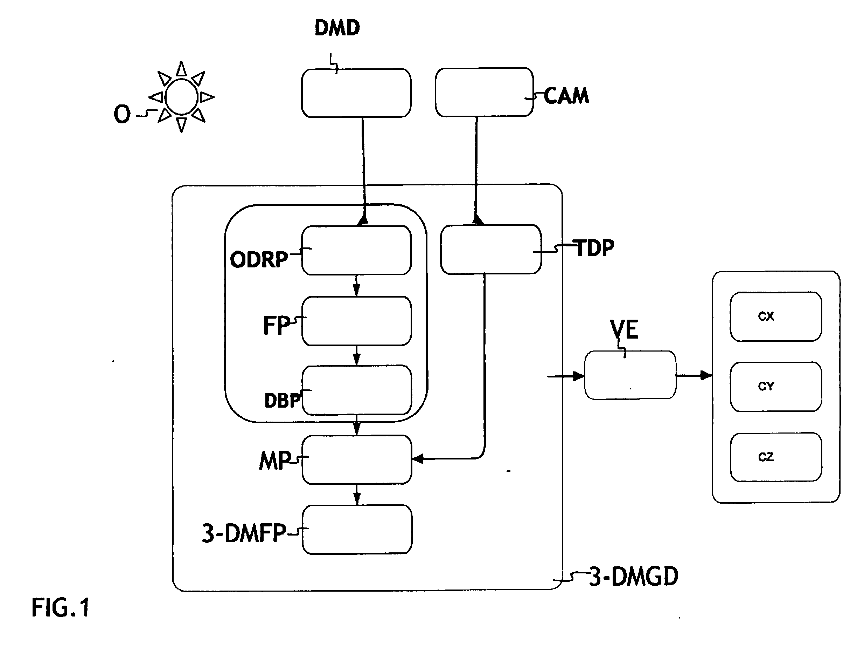

Fig. 1 represents a system for generating 3-Dimensional models according to the present invention.

In the following paragraphs, referring to the drawings, an implementation of the system for generating a 3-Dimensional model of the present invention, a related method, a related 3-Dimensional model generating device 3-DMGD mentioned in the appended claims according to the present invention will be described.

In the first paragraph of this description the main elements of the system for generating 3-Dimensional models as presented in FIG. 1 are described. In the second paragraph, all connections between the before mentioned elements and described means are defined. Subsequently all relevant functional means of the system including a related 3-Dimensional model generating device 3-DMGD, are described followed by a description of all interconnections. In the succeeding paragraph the actual execution of the system for generating a 3-Dimensional model.

An essential element of the system of the present invention is an object depth representation determining part ODRP for determining an object depth representation of the object O wherefrom a 3-Dimensional model is to be generated. This object depth representation can be determined using infrared destination measurement device like a time-of-flight camera or alternatively an object depth representation can be determined by applying depth extraction algorithms like stereo matching, by applying a stereo pair of cameras.

In addition there is a texture determination part TDP that is adapted to generate a (High Definition) texture of the object where the texture may be generated based on a High Definition 2-dimensional picture or a normal 2-dimensional picture based on a well known technology like UV mapping.

Furthermore there is a mapping part MP for generating a 3-Dimensional object representation by mapping the (High Definition) texture to the object depth representation determined by the object depth representation determining part ODRP.

The object depth representation determining part ODRP has an input terminal that is at the same an input-terminal of the 3-dimensional model generation device 3-DMGD. The object depth representation determining part ODRP is coupled to the filtering part FP that in tum is coupled to the Dept blurring part DBP. The depth blurring part DBP is coupled with an output to a first input of the mapping part MP and the texture determining part TDP is coupled with an output to a second input of the mapping part MP. The mapping part has an output-terminal that is coupled to an input-terminal of the 3-dimensional object forwarding part 3-DOFP that in tum has an output-terminal being at the same time an output-terminal of the 3-dimensional model generation device 3-DMGD.

This output-terminal of the 3-dimensional model generation device 3-DMGD may be coupled to a Virtual environment like Second Life or over a communications network like access networks and core communications networks.

In order to explain the present invention that a 3-Dimensional object representation of a certain person is to be obtained. Such 3-Dimensional object representation this certain person is usable for injecting such a representation in a Virtual environment like Second Life or OpenSim.

At first, the object depth representation determining part ODRP determines an object depth representation of the object O being the person whereof a 3-Dimensional model is to be generated. This object depth representation is assumed to be determined using a distance measuring device DMD like an infrared destination measurement device like a time-of-flight camera or alternatively an object depth representation can be determined by applying depth extraction algorithms like stereo matching, to a stereo pair of cameras.

In addition the texture determination part TDP generates a (High Definition) texture of the object where the texture may be a High Definition 2-dimensional picture or a normal 2-dimensional picture where the picture is taken using a camera CAM.

Subsequently the mapping part MP generates a 3-Dimensional model of this person by at first applying displacement mapping on the generated object depth representation of the object (O) which is determined by the object depth representation determining part ODRP. Subsequently the mapping part MP, maps the generated (High Definition) texture of the object onto the 3-Dimensional model of the object, produced using the displacement mapping, a texturized 3-dimensional model of the object is derived under normal lighting conditions.

The mapping part MP first applies the displacement mapping technique, on the object depth representation which is determined by the object depth representation determining part ODDP, being defined in such "using a (procedural-) texture- or height map to cause an effect where the actual geometric position of points over the surface are displaced based on the previously calculated depth representation.

The resulting texturized 3-Dimensional model of this person can be used by the 3-Dimensional model Forwarding Part 3-DMFP for injecting this model into a Virtual Environment. This virtual environment VE, including the injected texturized model, here being the 3-Dimensional texturized model of the person can be accessed and the contents thereof can be viewed by any of the client devices CX, CY, CZ.

Due to the current lighting conditions, i.e. no additional lighting is applied, in the first determining of the object depth representation of this person the resulting object depth representation being a gray-scale picture with the gray-scale value representing the depth contains a certain amount of noise, meaning that the depth value of each point of the object is not perfectly accurate.

This noise include in the object depth representation can be partially or wholly be removed using dedicated filtering by means of the filtering part.

A first part of the noise is constituted by the background of the object as in generating the object depth representation the background may be included.

This background can be removed from the object depth representation of the person by removing all points of the object that related to the background of the object, e.g. by removing all points of the object depth representation (relating to the background of the object) lying outside a certain depth range.

The second part of the noise constituted due to the imperfect lighting conditions is removed by filtering the object depth representation. This filtering may be the application of e.g. Gaussian filter, bipolar filters.

The resulting object depth representation, being an improved object depth representation, not anymore including any background or only including restricted or partially leftover background, can be used as an input of the mapping part, for mapping a texture onto this improved object depth representation and in this way generating an improved 3-dimensional object representation of the person.

Furthermore in order to further improve the object depth representation and hence obtain an even further improved 3-dimensional object representation of the person, a step of depth blurring can be applied by inputting the first improved object depth representation of the person to the Depth Blurring part DBP. In this step of depth blurring the first improved object depth representation is further improved to become more suitable for a first displacement mapping step and a subsequent texture mapping step.

The further improved object depth representation resulting from the out put of the depth blurring part DPP subsequently can be used an input of the mapping part, for a first displacement mapping step and a subsequent texture mapping step. wherein the texture is mapped onto an improved 3-D Model and in this way generating a texturized improved 3-dimensional object representation of the person.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for generating a 3 Dimensional model of an object, **CHARACTERISED IN THAT** said method comprises the steps of
a. determining an object depth representation of said object (O); and
b. generating a texture of said object (O); and
c. generating a 3-Dimensional model of said object by applying displacement mapping on said object depth representation of said object (O) and subsequently applying said texture onto said 3-dimensional model of said object generated using said displacement mapping.

2. Method according to claim 1, **CHARACTERISED IN THAT** said step of determining an object depth representation of said object based on extraction of a depth message on said object from a camera input.

3. Method according to claim 1, **CHARACTERISED IN THAT** said step of determining object depth representation of said object based on depth measurements of an infrared distance measuring device (DMD).

4. Method according to any of claim 1 to 3, **CHARACTERISED IN THAT** said step of generating a texture of said object is based on a 2-dimensional picture of a camera (CAM).

5. Method according to any of claim 1 to claim 3, **CHARACTERISED IN THAT** said method additionally comprises the step of filtering noise and/or background information from said object depth representation.

6. Method according to claim any of claims 1 to claim 3 and claim 5, **CHARACTERISED IN THAT** said method additionally comprises the step of blurring said object depth representation.

7. System for generating a 3 Dimensional model of an object (O), **CHARACTERISED IN THAT** said system comprises:
a. an object depth representation determining part (ODRP), adapted to determine depth information of said object (O) based on object depth measurements performed by a distance measuring device (DMD); and
b. a texture determination part (TDP), adapted to generate a texture of said object (O); and
c. a mapping part (MP), adapted to generate a 3-Dimensional model of said object using displacement mapping and subsequently mapping said texture onto said 3-dimensional model of said object generated using said displacement mapping.

8. 3-Dimensional Model generator for use in method according to claim 1, **CHARACTERISED IN THAT** said 3-Dimensional Model generator comprises:
a. object depth representation determining part (ODRD), adapted to determine depth information of said object (O); and
b. texture determination part (TDP), adapted to generate a HD texture of said object; and
c. mapping part (MP), adapted to generate a 3-Dimensional model of said object using displacement mapping and subsequently mapping said texture onto said 3-dimensional model of said object generated using said displacement mapping.
